# EUROPEAN PATENT APPLICATION

(11) **EP 3 016 294 A1**
(43) Date of publication of application: **04.05.2016**
(21) Application number: 14306702.3
(22) Date of filing: 27.10.2014
(51) Int. Cl.: H04B 3/46, H04M 3/30

(54) **Method and device for localization of a bridged tap**

(71) Applicant: ALCATEL LUCENT, 92100 Boulogne-Billancourt (FR)
(72) Inventor: Dardenne, Xavier, 6041 Gosselies (BE); Drooghaag, Benoît, 6041 Gosselies (BE)
(74) Representative: ALU Antw Patent Attorneys

(57) **Abstract**

Embodiments relate to a method for localization of a bridged tap (6) on a subscriber line (5) between an access node (3) and a subscriber device (4), wherein the access node (3) is connected to at least a second subscriber device (4') by a second subscriber line (5'), executed by a localization device (2), comprising:
- receiving (S1) measurement data representative of a line transfer function (Hlog), a downstream far-end crosstalk function and an upstream far-end crosstalk function of the subscriber line (5),
- determining (52) local minima (hᵢ) of the line transfer function (Hlog),
- determining (54) local minima (xdᵢ, xuᵢ) of the downstream far-end crosstalk function and the upstream far-end crosstalk function,
- determining (55) whether the bridged tap (6) is located in a neighborhood of the access node (3) or in a neighborhood of the subscriber device (4) in function of the local minima (hᵢ) of the line transfer function (Hlog) and the local minima (xdᵢ, xuᵢ) of the downstream far-end crosstalk function and the upstream far-end crosstalk function.

## Description

### FIELD OF THE INVENTION

The present invention relates to the field of digital subscriber lines. In particular, the present invention relates to methods and devices for localization of a bridged tap on a subscriber line.

### BACKGROUND

In a subscriber line, such as a twisted pair in the xDSL case, the presence of bridged taps (un-terminated loop segment connected in parallel to the main transmission line) directly impacts the communication channel and limits the performances. Very often, bad wirings inside customer houses can create bridged taps and dramatically reduce xDSL performance. Bridged taps are also sometimes present in the first meters of the loop, when a twisted-pair has been re-assigned to another customer or when it has been connected to a new access node.

For this reason, existing techniques enable the detection and, in some cases, the localization of bridged taps. The localization of the bridged tap, and in particular the discrimination between a bridged tap located at the central office and a bridged tap located at the customer premises, is of prime importance since this implies different resolution process. Customer premises problems are usually the responsibility of the end-user, with the assistance of the xDSL service provider (or service re-seller). Cabling problems at the central office are under the responsibility of the infrastructure owner, typically the incumbent operator.

There are known techniques to detect and localize bridged-taps on an xDSL line via a SELT (Single Ended Line Testing) measurement. The principle is based on TDR (Time-Domain Reflectometry) or FDR (Frequency-Domain Reflectometry) and on the fact that the presence of a bridged tap creates some signal reflections at the tap connection point and at the tap's end because of impedance mismatches. However, the main drawback of SELT methods is that a service interruption is required, as the signal needed to perform the SELT measurement is not compatible with the "normal" xDSL signal used for communication.

Existing non-intrusive DELT-methods (for Dual Ended Line Testing) are not able to localize usual bridged taps.

### SUMMARY

It is thus an object of embodiments of the present invention to propose methods and devices for localization of a bridged tap, which do not show the inherent shortcomings of the prior art.

Accordingly, embodiments relate to a method for localization of a bridged tap on a subscriber line between an access node and a subscriber device, wherein the access node is connected to at least a second subscriber device by a second subscriber line, executed by a localization device, comprising:
- receiving measurement data representative of a line transfer function of the subscriber line, of a downstream far-end crosstalk transfer function and an upstream far-end crosstalk transfer function of the at least one second subscriber line towards the subscriber line,
- determining local minima of the line transfer function,
- determining local minima of the downstream far-end crosstalk transfer function and the upstream far-end crosstalk transfer function,
- determining whether the bridged tap is located in a neighborhood of the access node or in a neighborhood of the subscriber device in function of the local minima of the line transfer function and the local minima of the downstream far-end crosstalk transfer function and the upstream far-end crosstalk transfer function.

Correspondingly, embodiments relate to a localization device for localization of a bridged tap on a subscriber line between an access node and a subscriber device, wherein the access node is connected to at least a second subscriber device by a second subscriber line, comprising:
- means for receiving measurement data representative of a line transfer function of the subscriber line, of a downstream far-end crosstalk transfer function and an upstream far-end crosstalk transfer function of the at least one second subscriber line towards the subscriber line,
- means for determining local minima of the line transfer function, of the downstream far-end crosstalk transfer function and the upstream far-end crosstalk transfer function,
- means for determining whether the bridged tap is located in a neighborhood of the access node or in a neighborhood of the subscriber device in function of the local minima of the line transfer function and the local minima of the downstream far-end crosstalk transfer function and the upstream far-end crosstalk transfer function.

In some embodiments, the measurement data representative of the downstream far-end crosstalk transfer function and the upstream far-end crosstalk transfer function comprise measurement data of a downstream Quiet-Line-Noise function and of an upstream Quiet-Line-Noise function of the subscriber line.

In some embodiments, the measurement data representative of the downstream far-end crosstalk transfer function and the upstream far-end crosstalk transfer function comprise a downstream far-end crosstalk channel transfer function and an upstream far-end crosstalk channel transfer function determined for implementing a vectoring technique.

The method may comprise determining that the bridged tap is located in a neighborhood of the subscriber device if a majority of the local minima of the downstream far-end crosstalk transfer function correspond to local minima of the line transfer function and any eventual local minima of the upstream far-end crosstalk transfer function do not correspond to any of the local minima of the line transfer function.

The method may comprise determining that the bridged tap is located in a neighborhood of the access node if a majority of the local minima of the upstream far-end crosstalk transfer function correspond to local minima of the line transfer function and any eventual local minima of the downstream far-end crosstalk transfer function do not correspond to any of the local minima of the line transfer function.

The bridged tap may be detected in function of the local minima of the line transfer function.

The measurement data may be obtained in response to a request sent to the access node and/or the subscriber device.

Embodiments also relate to a system comprising a localization device, an access node and a subscriber device connected to the access node by a subscriber line.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figures 1a and 1b are block diagram of systems for localization of a bridged tap on a subscriber line,
Figure 2 is a flowchart of a method for localization of a bridged tap, executed by a localization device,
Figure 3 is a graph of the line transfer function and the quiet-line-nose functions of a subscriber line,
Figure 4a and 4b are graphs of the line transfer function of a subscriber line and of the far-end crosstalk transfer functions between this line and a neighboring line,
Figures 4c and 4d are graphs of the line transfer function of another subscriber line and of the far-end crosstalk transfer functions between this line and a neighboring line, and
Figure 5 is a structural block diagram of a localization device.

### DESCRIPTION OF EMBODIMENTS

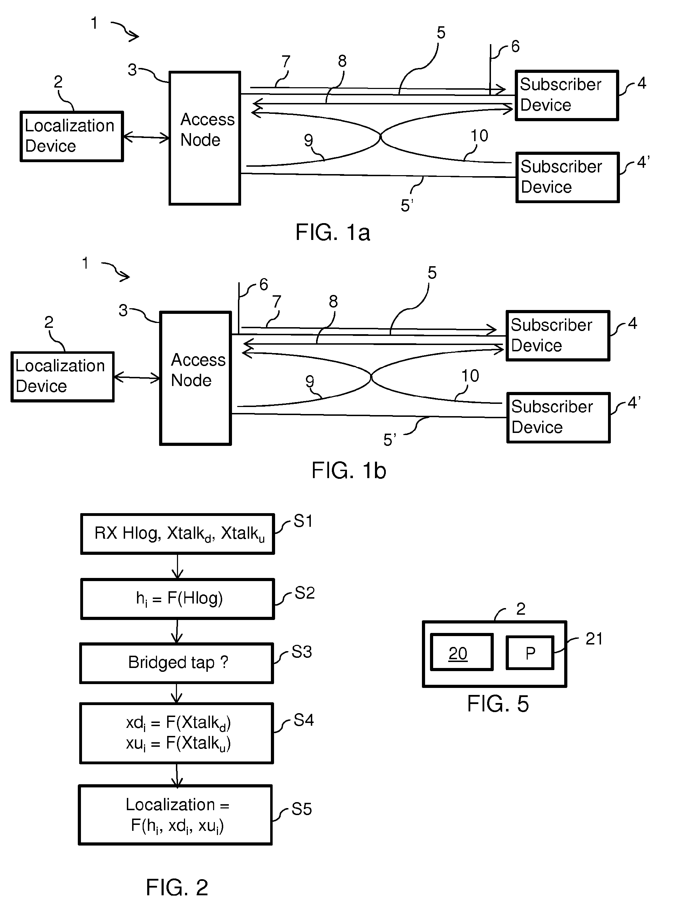

**Figure 1a** shows a telecommunication system 1 comprising a localization device 2, an access node 3, a subscriber device 4 connected to the access node 3 by a subscriber line 5, and at least one other subscriber device 4' connected to the access node 3 by a corresponding subscriber line 5'.

The downstream direct signal path 7 and the upstream direct signal path 8 of the subscriber line 5 and the downstream far-end crosstalk 9 from the subscriber line 5' towards the subscriber line 5 and the upstream far-end crosstalk 10 from the subscriber line 5' towards subscriber line 5 are shown by arrows on Figure 1 a. As usual, "downstream" means from the access node 3 to the subscriber devices 4, 4', and "upstream" means from the subscriber devices 4, 4' to the access node 3.

In Figure 1a, a bridged tap 6 is connected to the subscriber line 5 in the neighborhood of the subscriber device 4.

**Figure 1b** shows another version of the telecommunication system 1, wherein the bridged tap 6 is connected to the subscriber line 5 in the neighborhood of the access node 3.

In the telecommunication system 1, the access node 3 and the subscriber device 4 use xDSL technology for communication. Moreover, the access node 3 and the subscriber device 4 perform measurements on the subscriber line 5, in a DELT configuration (Dual Ended Line Testing).

In an embodiment, the measures include the line transfer function Hlog, the downstream Quiet-line-noise QLN_{d} and the upstream Quiet-line-noise QLNᵤ of the subscriber line 5. The Quiet-line-noise of a line is a measurement of the noise power spectral density performed by the receiver modem (the subscriber device 4 modem in downstream, the access node 3 modem in upstream) when no signal is being transmitted on the line. Very often, the QLN is dominated by the far-end crosstalk. Assuming the subscriber device 4 noise floor is low and there is no other external disturber, the QLN measurement can be assimilated as a measurement of the far-end crosstalk from neighboring lines.

In another embodiment, wherein the access node 3 and the subscriber device 4 implement a vectoring technique to minimize the influence of the crosstalk, the measures include the line transfer function Hlog, the downstream far-end crosstalk channel transfer function Xlog_{d} and the upstream far-end crosstalk channel transfer function Xlogᵤ. Xlog_{d} and Xlogᵤ are determined for implementing the vectoring technique. For example, in Vectored VDSL2 and GFast, the various crosstalk couplings are estimated based on error samples measurements (also called slicer errors). They comprise both the phase and amplitude of the error vector (inc. XT and noise) for a specific PILOT symbol. The downstream far-end crosstalk channel transfer function Xlog_{d} and the upstream far-end crosstalk channel transfer function Xlogᵤ may be determined by the access node 3 in function of the slicer errors and the PILOT symbols.

In an embodiment, the measures include the line transfer function Hlog, the slicer errors and the used pilots, and the localization device 2 may determine the downstream far-end crosstalk channel transfer function Xlog_{d} and the upstream far-end crosstalk channel transfer function Xlogᵤ on its own.

The measurement data representative of Hlog, QLN_{d} and QLNᵤ or Hlog, Xlog_{d} and Xlogᵤ may be determined by the access node 3 and/or the subscriber device 4 for example during a synchronization phase and/or upon request from the localization device 2.

The localization device 2 may obtain the measurement data representative of Hlog, QLN_{d} and QLNᵤ or Hlog, Xlog_{d} and Xlogᵤ from the access node 3 and/or the subscriber device 4, and locate the bridged tap 6 in function of the obtained measurement data. The localization device 2 may be a network analyzer which, in addition to the localization of the bridged tap 6, performs other functions such as analyzing, monitoring, troubleshooting... of the subscriber lines 5, 5'.

As can be seen by comparing Figures 1a and 1b, under normal crosstalk conditions, when the bridged tap 6 is located close to the subscriber device 4, its effect will be visible at the same time on the downstream direct signal path 7, the upstream direct signal path 8 and the downstream far-end crosstalk 9, since both the direct signals and the downstream far-end crosstalk signal "see" the bridged tap 6. In contrast, the upstream far-end crosstalk 10 is almost not impacted since most of the upstream far-end crosstalk signal is coupled to the subscriber line 5 after the bridged tap 6 connection point. This is illustrated on Figure 1a.

To the opposite, when the bridged tap 6 is located close to the access node 3, its effect will be visible at the same time on the downstream direct signal path 7, the upstream direct signal path 8 and the upstream far-end crosstalk 10, since both the direct signals and the upstream far-end crosstalk signal "see" the bridged tap 6. In contrast, the downstream far-end crosstalk 9 is almost not impacted since most of the downstream far-end crosstalk signal is coupled to the subscriber line 5 after the bridged tap 6 connection point. This is illustrated on Figure 1 b.

This difference is used by the localization device 2 to locate the bridged tap 6, as explained in more detail with reference to Figures 2 to 4.

**Figure 2** is a flowchart of a method for localization of a bridged tap on a subscriber line, executed by the localization device 2.

The localization device 2 obtains measurement data representative of the line transfer function Hlog, the downstream far-end crosstalk transfer function Xtalk_{d} and the upstream far-end crosstalk function transfer Xtalkᵤ of the subscriber line 5 (Step S1), for example in response to a request message to the access node 3. The downstream far-end crosstalk transfer function Xtalk_{d} and the upstream far-end crosstalk function transfer Xtalkᵤ represent the crosstalk transfer functions of the at least second subscriber line 5' towards the subscriber line 5 on which the localization device 2 tries to locate a bridged tap 6.

As explained above, the downstream far-end crosstalk transfer function Xtalk_{d} and the upstream far-end crosstalk transfer function Xtalkᵤ may be represented by the Quiet-Line-Noise measurements QLN_{d} and QLNᵤ, by the far-end crosstalk channel transfer functions Xlog_{d} and Xlogᵤ determined for implementing a vectoring technique, or by slicer errors measures and corresponding pilots.

Then, the localization device 2 determines the local minima hᵢ of the line transfer function Hlog (Step S2), and detects whether a bridged tap 6 is present on the subscriber line 5 in function of the local minima hᵢ (Step S3). Indeed, a bridged tap creates dips (local minima) in the line transfer function Hlog, at frequencies corresponding to odd multiple of c/4*Lt where c is the phase velocity and Lt is the length of the bridged tap. It is remarkable that the position of the dips only depends on the bridged-tap length and not on its position. Accordingly, determining the local minima of the line transfer function Hlog (for example by looking for changes of sign in the first derivative of the curve) and verifying that their respective positions are odd multiples of the same constant allows detecting the presence of a bridged tap.

In case a bridged tap 6 has been detected at step S3, the localization device 2 determines the local minima xdᵢ of the downstream far-end crosstalk transfer function Xtalk_{d} and the local minima xuᵢ of the upstream far-end crosstalk transfer function Xtalkᵤ (Step S4), then determines whether the bridged tap 6 is located closer to the access node 3 or the subscriber device 4 in function of the local minima hᵢ, xdᵢ and xuᵢ (Step S5). More specifically:
- If the majority of the downstream local minima xdᵢ correspond to local minima hᵢ of the line transfer function Hlog and any eventual upstream local minima xuᵢ do not correspond to any of the local minima hᵢ of the line transfer function Hlog, the localization device 2 determines that the bridged tap 6 is located near the subscriber device 4.
- If the majority of the upstream local minima xuᵢ correspond to local minima hᵢ of the line transfer function Hlog and any eventual downstream local minima xdᵢ do not correspond to any of the local minima hᵢ of the line transfer function Hlog, the localization device 2 determines that the bridged tap 6 is located near the access node 3.
- If downstream local minima xdᵢ and upstream local minima xuᵢ correspond to local minima hᵢ of the line transfer function Hlog, the localization device 2 determines that the bridged tap 6 is located closer to the access node 3 if the upstream local minima xuᵢ are deeper than the downstream local minima xdᵢ, and inversely that the bridged tap 6 is located closer to the subscriber device 4 if the downstream local minima xdᵢ are deeper than the upstream local minima xuᵢ.
- In other cases, the localization device 2 does not determine a location of the bridged tap 6.

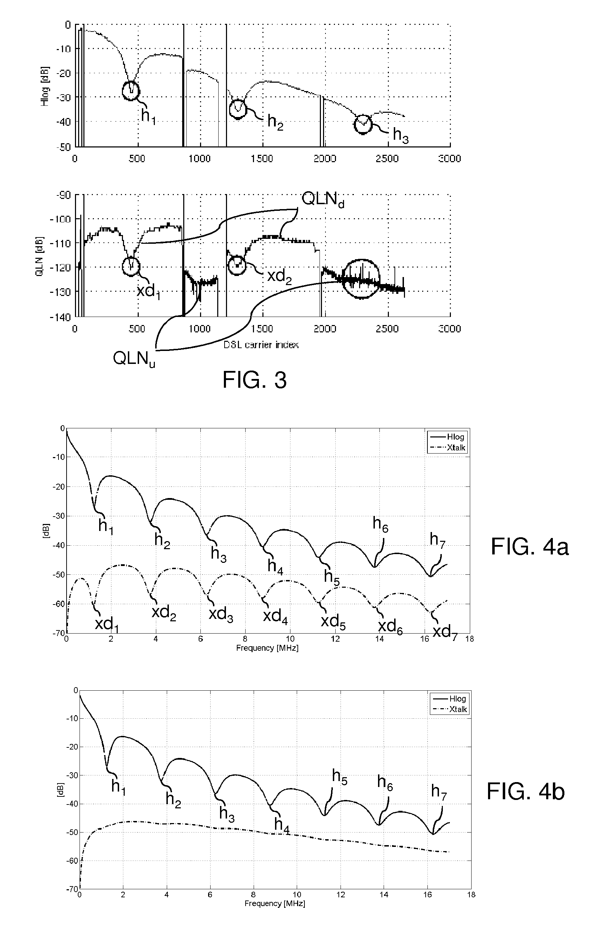

**Figure 3** is a graph of the line transfer function Hlog, the downstream Quiet-line-noise QLN_{d} and the upstream Quiet-line-noise QLNᵤ of a subscriber line 5 having a bridged tap 6 in the neighborhood of the subscriber device 4.

Local minima h₁, h₂ and h₃ of the line transfer function Hlog are shown. The downstream Quiet-line-noise QLN_{d} has corresponding local minima xd₁ and xd₂. In contrast, the local minima of the upstream Quiet-line-noise QLNᵤ do not match. This match between the local minima hᵢ and xdᵢ shows that the bridged tap 6 is near the subscriber device 4.

**Figures 4a and 4b** are graphs of the line transfer function Hlog, the downstream far-end crosstalk channel transfer function Xlog_{d} (for Figure 4a) and the upstream far-end crosstalk channel transfer function Xlogᵤ (for Figure 4b) of a subscriber line 5 having a bridged tap 6 in the neighborhood of the subscriber device 4. Specifically, these graphs have been obtained for a bridged tap 6 located at 50m of the subscriber device 4.

Local minima h₁, h₂... h₇ of the line transfer function Hlog are shown. The downstream far-end crosstalk k channel transfer function Xlog_{d} has corresponding local minima xd₁, xd₂... xd₇. In contrast, the local minima of the upstream far-end crosstalk channel transfer function Xlogᵤ do not match. This match between the local minima hᵢ and xdᵢ shows that the bridged tap 6 in near the subscriber device 4.

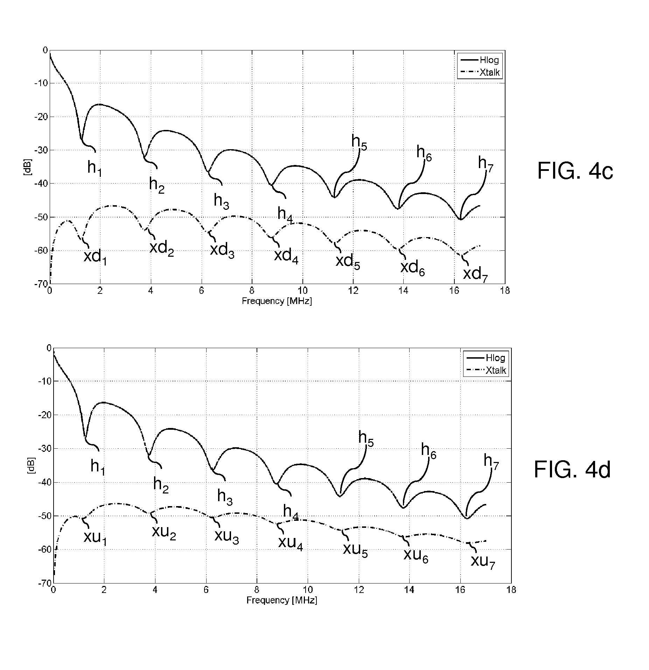

**Figures 4c and 4d** are graphs of the line transfer function Hlog, the downstream far-end crosstalk channel transfer function Xlog_{d} (for Figure 4c) and the upstream far-end crosstalk channel transfer function Xlogᵤ (for Figure 4d) of a subscriber line 5 having a bridged tap 6 closer to the subscriber device 4 than to the access node, but not as close as in the case of Figures 4a and 4b. Specifically, these graphs have been obtained for a bridged tap 6 located at 150m of the subscriber device 4.

By contrast with Figures 4a and 4b, both the downstream local minima xd₁, xd₂... xd₇ and the upstream local minima xu₁, xu₂... xu₇ match the local minima h₁, h₂... h₇ of the line transfer function Hlog. However, the downstream local minima xd₁, xd₂... xd₇ are deeper than the upstream local minima xu₁, xu₂... xu₇. This shows that the bridged tap 6 is located closer to the subscriber device 4 than to the access node 3.

**Figure 5** is a structural view of the localization device 2. The localization device 2 comprises a processor 20 and a memory 21. The memory 21 stores a computer program P which, when executed by the processor 20, cause the localization device 2 to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for localization of a bridged tap (6) on a subscriber line (5) between an access node (3) and a subscriber device (4), wherein the access node (3) is connected to at least a second subscriber device (4') by a second subscriber line (5'), executed by a localization device (2), comprising:
- receiving (S1) measurement data representative of a line transfer function (Hlog) of the subscriber line (5), of a downstream far-end crosstalk transfer function (Xtalk_{d}) and an upstream far-end crosstalk transfer function (Xtalkᵤ) of the at least second subscriber line towards the subscriber line (5),
- determining (S2) local minima (hᵢ) of the line transfer function (Hlog),
- determining (S4) local minima (xdᵢ, xuᵢ) of the downstream far-end crosstalk transfer function and the upstream far-end crosstalk transfer function,
- determining (S5) whether the bridged tap (6) is located in a neighborhood of the access node (3) or in a neighborhood of the subscriber device (4) in function of the local minima (hᵢ) of the line transfer function (Hlog) and the local minima (xdᵢ, xuᵢ) of the downstream far-end crosstalk transfer function and the upstream far-end crosstalk transfer function.

2. Method according to claim 1, wherein the measurement data representative of the downstream far-end crosstalk transfer function and the upstream far-end crosstalk transfer function comprise measurement data of a downstream Quiet-Line-Noise function (QLN_{d}) and of an upstream Quiet-Line-Noise function (QLNᵤ) of the subscriber line (5).

3. Method according to claim 1, wherein the measurement data representative of the downstream far-end crosstalk transfer function and the upstream far-end crosstalk transfer function comprise a downstream far-end crosstalk channel transfer function (Xlog_{d}) and an upstream far-end crosstalk channel transfer function (Xlogᵤ) determined for implementing a vectoring technique.

4. Method according to one of claims 1 to 3, comprising determining that the bridged tap (6) is located in a neighborhood of the subscriber device (4) if a majority of the local minima (xdᵢ) of the downstream far-end crosstalk transfer function correspond to local minima (hᵢ) of the line transfer function and any eventual local minima (xuᵢ) of the upstream far-end crosstalk transfer function do not correspond to any of the local minima (hᵢ) of the line transfer function.

5. Method according to one of claims 1 to 4, comprising determining that the bridged tap (6) is located in a neighborhood of the access node (3) if a majority of the local minima (xuᵢ) of the upstream far-end crosstalk transfer function correspond to local minima (hᵢ) of the line transfer function and any eventual local minima (xdᵢ) of the downstream far-end crosstalk transfer function do not correspond to any of the local minima (hᵢ) of the line transfer function.

6. Method according to one of claims 1 to 5, comprising detecting (S3) the bridged tap (6) in function of the local minima (hᵢ) of the line transfer function (Hlog).

7. Method according to one of claims 1 to 6, wherein said measurement data is obtained in response to a request sent to the access node (3) and/or the subscriber device (4).

8. Computer program (P) comprising instructions for performing the method according to one of claims 1 to 7 when said instructions are executed by a computer.

9. Localization device (2) for localization of a bridged tap (6) on a subscriber line (5) between an access node (3) and a subscriber device (4), wherein the access node is connected to at least a second subscriber device (4') by a second subscriber line (5'), comprising:
- means (20, 21) for receiving measurement data representative of a line transfer function of the subscriber line (5), of a downstream far-end crosstalk transfer function and an upstream far-end crosstalk transfer function of the at least one second subscriber line (5') towards the subscriber line,
- means (20, 21) for determining local minima of the line transfer function, of the downstream far-end crosstalk transfer function and the upstream far-end crosstalk transfer function,
- means (20, 21) for determining whether the bridged tap is located in a neighborhood of the access node or in a neighborhood of the subscriber device in function of the local minima of the line transfer function and the local minima of the downstream far-end crosstalk transfer function and the upstream far-end crosstalk transfer function.

10. System (1) comprising a localization device (2) according to claim 9, an access node (3) and a subscriber device (4) connected to the access node (3) by a subscriber line (5).

## Amended claims

### Amended claims in accordance with Rule 137(2) EPC.

1. Method for localization of a bridged tap (6) on a subscriber line (5) between an access node (3) and a subscriber device (4), wherein the access node (3) is connected to at least a second subscriber device (4') by a second subscriber line (5'), executed by a localization device (2), **characterized by** comprising:
- receiving (S1) measurement data representative of a line transfer function (Hlog) of the subscriber line (5), of a downstream far-end crosstalk transfer function (Xtalk_{d}) and an upstream far-end crosstalk transfer function (Xtalkᵤ) of the at least second subscriber line towards the subscriber line (5),
- determining (S2) local minima (hᵢ) of the line transfer function (Hlog),
- determining (S4) local minima (xdᵢ, xuᵢ) of the downstream far-end crosstalk transfer function and the upstream far-end crosstalk transfer function,
- determining (S5) whether the bridged tap (6) is located in a neighborhood of the access node (3) or in a neighborhood of the subscriber device (4) in function of the local minima (hᵢ) of the line transfer function (Hlog) and the local minima (xdᵢ, xuᵢ) of the downstream far-end crosstalk transfer function and the upstream far-end crosstalk transfer function.

2. Method according to claim 1, wherein the measurement data representative of the downstream far-end crosstalk transfer function and the upstream far-end crosstalk transfer function comprise measurement data of a downstream Quiet-Line-Noise function (QLN_{d}) and of an upstream Quiet-Line-Noise function (QLNᵤ) of the subscriber line (5).

3. Method according to claim 1, wherein the measurement data representative of the downstream far-end crosstalk transfer function and the upstream far-end crosstalk transfer function comprise a downstream far-end crosstalk channel transfer function (Xlog_{d}) and an upstream far-end crosstalk channel transfer function (Xlogᵤ) determined for implementing a vectoring technique.

4. Method according to one of claims 1 to 3, comprising determining that the bridged tap (6) is located in a neighborhood of the subscriber device (4) if a majority of the local minima (xdᵢ) of the downstream far-end crosstalk transfer function correspond to local minima (hᵢ) of the line transfer function and any eventual local minima (xuᵢ) of the upstream far-end crosstalk transfer function do not correspond to any of the local minima (hᵢ) of the line transfer function.

5. Method according to one of claims 1 to 4, comprising determining that the bridged tap (6) is located in a neighborhood of the access node (3) if a majority of the local minima (xuᵢ) of the upstream far-end crosstalk transfer function correspond to local minima (hᵢ) of the line transfer function and any eventual local minima (xdᵢ) of the downstream far-end crosstalk transfer function do not correspond to any of the local minima (hᵢ) of the line transfer function.

6. Method according to one of claims 1 to 5, comprising detecting (S3) the bridged tap (6) in function of the local minima (hᵢ) of the line transfer function (Hlog).

7. Method according to one of claims 1 to 6, wherein said measurement data is obtained in response to a request sent to the access node (3) and/or the subscriber device (4).

8. Computer program (P) comprising instructions for performing the method according to one of claims 1 to 7 when said instructions are executed by a computer.

9. Localization device (2) for localization of a bridged tap (6) on a subscriber line (5) between an access node (3) and a subscriber device (4), wherein the access node is connected to at least a second subscriber device (4') by a second subscriber line (5'), **characterized by** comprising:
- means (20, 21) for receiving measurement data representative of a line transfer function of the subscriber line (5), of a downstream far-end crosstalk transfer function and an upstream far-end crosstalk transfer function of the at least one second subscriber line (5') towards the subscriber line,
- means (20, 21) for determining local minima of the line transfer function, of the downstream far-end crosstalk transfer function and the upstream far-end crosstalk transfer function,
- means (20, 21) for determining whether the bridged tap is located in a neighborhood of the access node or in a neighborhood of the subscriber device in function of the local minima of the line transfer function and the local minima of the downstream far-end crosstalk transfer function and the upstream far-end crosstalk transfer function.

10. System (1) comprising a localization device (2) according to claim 9, an access node (3) and a subscriber device (4) connected to the access node (3) by a subscriber line (5).
